# EUROPÄISCHE PATENTSCHRIFT

(11) **EP 0 986 732 B1**
(45) Veröffentlichungstag und Bekanntmachung des Hinweises auf die Patenterteilung: **17.12.2003**
(21) Anmeldenummer: 98924294.6
(22) Anmeldetag: 08.05.1998
(51) Int. Cl.: G01B 11/30, B61K 9/08, E01B 35/00

(54) **RIFFEL- UND LANGWELLENMESSUNG MIT LÄNGSLICHTSTRICH, FÜR SCHIENEN**
MEASUREMENT OF GROOVES AND LONG WAVES ON RAILS WITH A LONGITUDINAL STREAK OF LIGHT
MESURE DE STRIES ET D'ONDULATIONS LONGITUDINALES AU MOYEN D'UN RAYON LUMINEUX ALLONGE, SUR DES RAILS

(30) Priorität: 26.05.1997 DE 19721915
(43) Veröffentlichungstag der Anmeldung: 22.03.2000
(73) Patentinhaber: Rheinmetall Defence Electronics GmbH, 28309 Bremen (DE)
(72) Erfinder: BURGGRAF, Hubert, D-28876 Oyten (DE); KETTENBURG, Rolf, D-28876 Oyten (DE); KRUPP, Andreas, D-27299 Langwedel (DE); MAIWALD, Dirk, D-28844 Weyhe (DE); RATHJEN, Dirk, D-28357 Bremen (DE)
(74) Vertreter: Thul, Hermann, Dipl.-Phys.
(86) Internationale Anmeldenummer: EP9802714
(87) Internationale Veröffentlichungsnummer: WO98054543

(56) Entgegenhaltungen:
- EP-A- 0 433 555
- DE-A- 3 913 159
- US-A- 2 253 054
- US-A- 4 425 041
- US-A- 5 140 776
- US-A- 5 465 214

## Beschreibung

Die Erfindung betrifft ein Verfahren zur Messung von durch Riffel und/oder lange Wellen gebildeten Unebenheiten in der Oberfläche eines Objektes von einer Meßplattform aus, wobei die Meßplattform und das Objekt relativ zueinander bewegt werden.

Ein Anwendungsbeispiel für ein solches Verfahren ist die Messung von diesbezüglichen Unebenheiten in der Fahrfläche von in einem Gleisbett verlegten Schienen für schienengebundene Verkehrsmittel, wie Eisenbahn, Straßenbahn, U-Bahn u. dgl. Durch den Schienenfahrbetrieb entstehen auf den die Fahrflächen bildenden Schienenoberseiten lokale periodische Fahrflächenunebenheiten, die beim Abrollen der Räder des Schienenfahrzeugs Körperschall und Schwingung erzeugen, die zu einer Lärmbelästigung der Umwelt und zu einer Lärm- und Schwingungsbelästigung der Fahrgäste führen. Diese Fahrflächenunebenheiten müssen frühzeitig erkannt werden, da sie sich bei weiterem Schienenbetrieb zunehmend verstärken und den Fahrkomfort und letztlich auch die Fahrsicherheit erheblich beeinträchtigen. Schienen mit Fahrflächenunebenheiten sind einem erheblichen Verschleiß ausgesetzt und haben eine wesentlich kürzere Standzeit als Schienen ohne solche Fahrflächenunebenheiten. Die Fahrflächenunebenheiten, die als sog. Riffel mit einer Wellenlänge λ zwischen 10 mm und 300 mm und als sog. lange Wellen mit einer Wellenlänge λ zwischen 300 mm und 3000 mm definiert werden, müssen durch Schleifen, Fräsen oder Hobeln der Schienen beseitigt werden. Hierzu sind eine Reihe von Meßverfahren entwickelt worden, die es ermöglichen, die Fahrflächenunebenheiten zu vermessen und zwar sowohl bei routinemäßigen Inspektionsfahrten als auch zum Zwecke der Nachprüfung und Dokumentation der durchgeführten Oberflächenbearbeitung der Schienen. Dabei wird für den ordnungsgemäßen Zustand der Schienen ein sog. arithmetischer Mittenrauhwert Rₐ nach DIN 4768 definiert, der auf einer vorgegebenen Schienenlänge L nicht überschritten werden darf.

Bei einem bekannten Meßverfahren zur Messung von solchen Unebenheiten in der Fahrfläche von Schienen (Stuart L. Grassie "Measurement of railhead longitudinal profiles: a comparison of different techniques", Wear 191, (1996) Seite 245-251), das als sog. Wandersehnenmeßprinzip bekannt ist, wird mittels eines Abtaststiftes oder eines berührungslos messenden Sensors der Abstand von der Meßplattform zu einem Lineal gemessen, dessen beide Endpunkte die Schiene berühren. Das Lineal wird von der Meßplattform aus an die Schiene angedrückt und mit der Meßplattform längs der Schiene verfahren. Ist die Profilabweichung in einem senkrechten Schnitt durch die Schienenoberfläche eine ebenen Kurve, so stellt das Lineal eine Sehne der Kurve dar und aus den gemessenen Abständen, auch Pfeilhöhen genannt, wird auf das Profil geschlossen, aus denen wiederum die Rauheit der Fahrfläche berechnet werden kann. Um alle möglichen Wellenlängen der Fahrflächenunebenheiten zu erfassen, müssen mehrere Lineallängen verwendet werden, was extreme Nachteile bei der Verfahrensdurchführung mit sich bringt. Ein weiterer Nachteil dieses Verfahrens liegt darin begründet, daß der Abtaststift unabhängig von der Vibration der Meßplattform an die Schiene angedrückt werden muß, was einen hohen mechanischen Aufwand erfordert. Wird ein Inertialsystem an der Wagenachse befestigt, so werden die Messungen in einem von der Meßplattform unabhängigen Koordinatensystem aufgenommen. Der Meßaufbau ist zwar sehr einfach, das Meßsystem wird aber durch sehr viele Parameter beschrieben, die bekannt sein müssen. Das Verhalten des Meßsystems ist abhängig von der Geschwindigkeit der Meßplattform, von der Schiene, der Schwellenart und der Bettung. Es ist keine lokale Messung möglich, sondern es können nur statistische Aussagen bezüglich der Profilabweichungen über Meßlängen von ca. 10 m gemacht werden. Inertialsysteme funktionieren außerdem nur ab einer Minimalgeschwindigkeit der Meßplattform von ca. 20 km/h mit zufriedenstellender Genauigkeit, so daß der Einsatz solcher Meßsysteme in Verbindung mit sich langsam bewegenden Bearbeitungsmaschinen für den Schienenkopf nicht möglich ist.

Der Erfindung liegt die Aufgabe zugrunde, ein Verfahren der eingangs genannten Art und eine Vorrichtung hierfür anzugeben, das bzw. die berührungslos mißt, robust gegenüber der Relativbewegung zwischen Meßplattform und Objekt ist und unabhängig von der Bewegungsgeschwindigkeit gleich gute Meßergebnisse liefert.

Die Aufgabe ist bei einem Verfahren der im Oberbegriff des Anspruchs 1 bzw. bei einer Vorrichtung der im Oberbegriff des Anspruchs 13 angegebenen Gattung erfindungsgemäß durch die Merkmale im Kennzeichenteil des Anspruchs 1 bzw. des Anspruchs 13 gelöst.

Das erfindungsgemäße Verfahren hat den Vorteil, daß es mit hoher Meßgenauigkeit alle Unebenheiten in der Oberfläche des Objekts unabhängig von deren Wellenlängen erfaßt. Das Verfahren ist kontinuierlich und vollautomatisch. Bei Anwendung auf den Fahrweg von schienengebundenen Verkehrsmitteln kann es durch seine Geschwindigkeitsunabhängkeit sowohl bei extrem langsam als auch bei extrem schnell sich längs der Schiene bewegenden Meßplattformen eingesetzt werden und ohne Abstriche sowohl Meßplattformen eingesetzt werden und ohne Abstriche sowohl zusammen mit einer Bearbeitungsmaschine zum Glätten der Schienenoberfläche zwecks Kontrolle und Dokumentation des Arbeitsergebnisses als auch im Rahmen von Inspektionsfahrten zur Überprüfung der Beschaffenheit der Schienenfahrfläche auf einem mit hoher Geschwindigkeit (bis zu 200 km/h) fahrenden Meßwagen verwendet werden. Das erfindungsgemäße Verfahren ist unempfindlich gegen Abstandsänderungen und Verkippungen der Meßplattform relativ zur Schiene und damit problemlos bei Meßplattformen einzusetzen, die während des Meßbetriebs Schwingungen und Bewegungen ausgesetzt sind.

Zweckmäßige Ausführungsformen des erfindungsgemäßen Verfahrens bzw. der erfindungsgemäßen Vorrichtung zur Durchführung des Verfahrens mit vorteilhaften Weiterbildungen und Ausgestaltungen der Erfindung ergeben sich aus den weiteren Ansprüchen.

Die Erfindung ist anhand eines in der Zeichnung dargestellten Ausführungsbeispiels einer Vorrichtung zur Messung von Fahrflächenunbenheiten auf Schienen von einer längs der Schienen sich bewegenden Meßplattform aus im folgenden näher beschrieben. Es zeigen in schematischer Darstellung:
- Fig. 1: eine perspektivische Ansicht einer Meßvorrichtung zur Messung von Fahrflächenunebenheiten auf Schienen,
- Fig. 2: einen Querschnitt der Meßvorrichtung in Fig.1,
- Fig. 3: ein Blockschaltbild der Meßvorrichtung Fig.1 und 2,
- Fig. 4: einen Ausschnitt eines von der Meßvorrichtung aufgenommenen sog. Lichtschnittsignals,
- Fig. 5: eine gleiche Darstellung wie in Fig.1 mit einer Modifizierung der Meßvorrichtung.

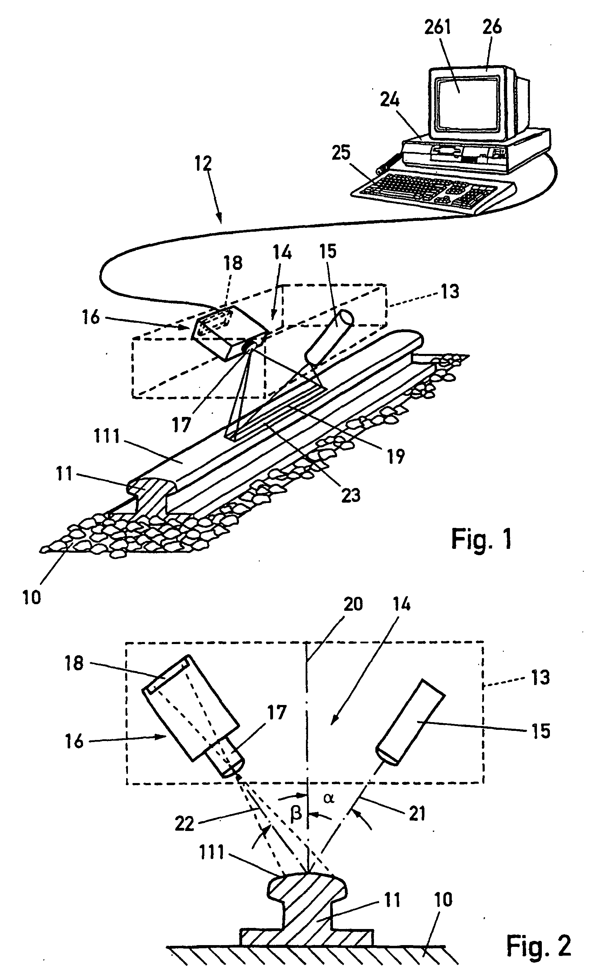

In Fig. 1 ist mit 10 ein Gleisbett einer Schienenstrecke und mit 11 ein Abschnitt einer Schiene eines im Gleisbett 10 verlegten Schienenstrangs bezeichnet. Die Oberseite der Schiene 11, die die Fahrfläche für die Räder eines Schienenfahrzeuges bildet, ist mit 111 bezeichnet. Auf dieser Fahrfläche 111 entstehen durch den Fahrbetrieb Unebenheiten, die aufgrund ihrer unterschiedlichen Wellenlänge in sog. Riffel und lange Wellen unterteilt werden. Als Riffel werden Unebenheiten mit einer Wellenlänge λ zwischen 10 mm und 300 mm und als lange Wellen Unebenheiten mit einer Wellenlänge λ von 300 mm bis 3000 mm bezeichnet. Für einen ordnungsgemäßen Fahrbetrieb ist es erforderlich, diese Fahrunebenheiten hinreichend frühzeitig zu beseitigen, was durch Schleifen, Fräsen oder Hobeln der Fahrfläche 111 erreicht wird. Um das Arbeitsergebnis überprüfen zu können oder um durch Inspektion die Notwendigkeit einer Bearbeitung der Schienen feststellen zu können, werden die Fahrunebenheiten mittels einer Meßvorrichtung 12 vermessen. Die Meßvorrichtung 12 ist hierzu auf einer Meßplattform 13 installiert, die längs der Schiene 11 mit einer beliebigen Geschwindigkeit verfahren wird. Zweckmäßigerweise ist hierzu die Meßplattform 13 mit Meßvorrichtung 12 an der Unterseite eines angetriebenen oder gezogenen Meßwagens installiert, der auf den Schienensträngen Inspektionsfahrten mit einer Geschwindigkeit bis zu 200km pro Stunde durchführt oder zum Zwecke der Kontrolle und Dokumentation des Ergebnisses der Schienenbearbeitung mit einer auf den Schienen entlanggeführten Schleif-, Fräs- oder Hobelmaschine gekoppelt ist, die sich mit extrem niedriger Geschwindigkeit längs des Schienenstrangs bewegt.

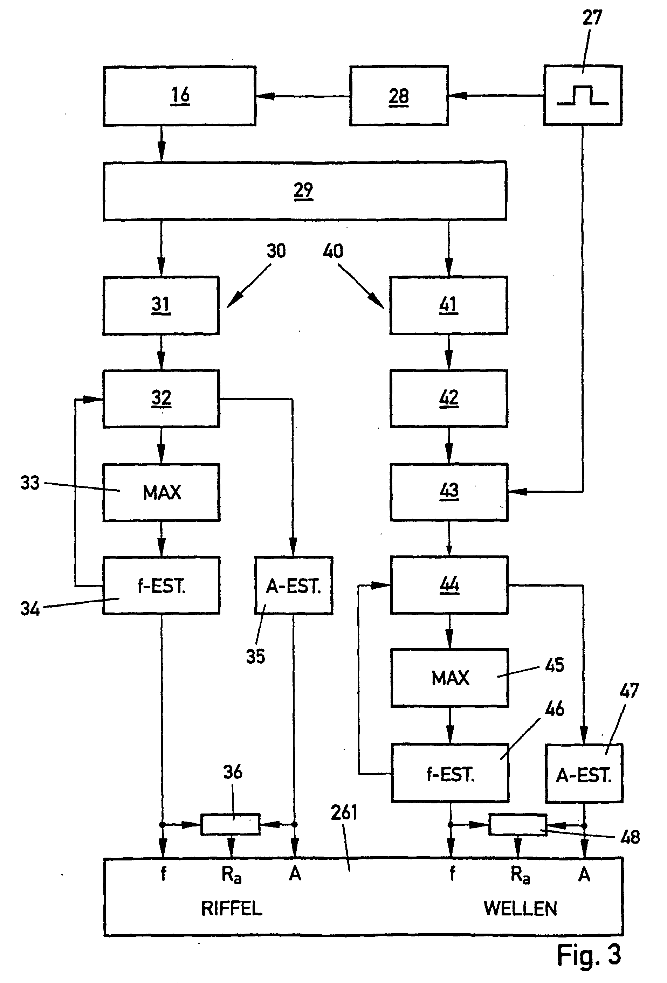

Die in Fig.1 perspektivisch und in Fig.2 in Frontansicht zu sehende Meßvorrichtung weist ein sog. Lichtschnitt- oder Lasertriangulationssystem 14 auf, das eine Laserlichtquelle 15 mit Linienoptik und eine Kamera 16 mit Aufnahmeobjektiv 17 und positionsempfindlichem Fotoarray 18 umfaßt. Die Laserlichtquelle 15 mit Linienoptik projiziert einen Laser- oder Lichtstrich 19 begrenzter Länge (im Ausführungsbeispiel von ca. 300 mm) in Schienenlängsrichtung auf die Fahrfläche 111, wobei die Laserlichtquelle 15 mit Linienoptik so an der Meßplattform 13 angeordnet ist, daß der Projektionswinkel gegenüber der Schienennormalen 20 geneigt ist. In Fig. 2 ist der Projektionswinkel mit α, die optische Achse der Linienoptik der Laserlichtquelle 15 mit 21 und die optische Achse des Aufnahmeobjektivs 17 der Kamera 16 mit 22 bezeichnet. Wie dort ersichtlich ist, ist die optische Achse 22 des Aufnahmeobjektivs 17 gegenüber der optischen Achse 21 der Laserlichtquelle 15 mit Linienoptik gekippt, wobei der Winkel zwischen der optischen Achse 22 und der Schienennormale 20 mit β bezeichnet ist. Der von der Kamera 16 erfaßte und auf dem Fotoarray 18 abgebildete Bildausschnitt überdeckt die Fahrfläche 111 auf der Länge des Lichtstrichs 19. Das Aufnahmeobjektiv 17 der Kamera 16 ist anamorphotisch ausgebildet und dabei so ausgerichtet, daß der Abbildungsmaßstab in Längsrichtung der Schiene 11 kleiner als der Abbildungsmaßstab quer dazu, also über die Fahrfläche 111 hinweg, ist. Ein solches anamorphotisches Aufnahmeobjektiv kann durch ein Linsensystem unter Verwendung von gekreuzt eingesetzten Zylinderlinsen oder speziell ellipsoid geschliffenen Linsen realisiert werden. Üblicherweise werden anamorphotisch abbildende Aufnahmeobjektive mit Abbildungsmaßstabsverhältnissen zwischen der horizontalen und der vertikalen Abbildung bis zu einem Faktor 2 im Handel angeboten. In dem hier beschriebenen Ausführungsbeispiel wird ein anamorphotisch abbildendes Aufnahmeobjektiv 17 mit einem Abbildungmaßstabsunterschied von einem Faktor größer als 15 verwendet. Hierdurch ist es möglich, den auf die Fahrfläche 111 projizierten Lichtstrahl 19 in seiner gesamten Länge von bis zu 500 mm und die Kontur der Linie in Schienenquerrichtung in einem Gegenstandgrößenbereich von unter 40 mm auf das beispielsweise als CCD-Chip ausgebildete Fotoarray 18 abzubilden. Dies bedeutet, daß z.B. bei einem Fotoarray 18 mit 500 x 500 Pixel, bei dem der Lichtstrich 19 in Schienenlängsrichtung, beispielsweise auf einer CCD-Zeile abgebildet wird, ein beleuchtetes Pixel eine Ortsauflösung von 1 mm zuläßt, während ein beleuchtetes Pixel in einer Spalte von der Abbildung des Lichtstrichs 19 in Schienenquerrichtung einer Ortsauflösung von 80 µm entspricht.

Die Kamera 16 ist ausgangsseitig an einem PC 24 mit Eingabetastatur 25 und Monitor 26 angeschlossen, in dem die Verarbeitung der Ausgangssignale der Kamera 16 erfolgt. Das Meßergebnis der Unebenheitsmessung wird im Bildschirm 261 des Monitors 26 dargestellt und kann zusätzlich mittels eines Druckers oder Plotters dokumentiert werden. Bei der Meßfahrt des Meßwagens mit Meßplattform 13 wird der auf der Schiene 11 entlanggeführte Lichtstrich 19 von der Kamera 16 mit einer Bildaufnahmesequenz abgetastet, die mit der Fahrgeschwindigkeit der Meßplattform 13 synchronisiert ist. Im Ausführungsbeispiel beträgt die Bildaufnahmesequenz oder Bildfolgefrequenz ca. 50 Hz bei einer Fahrgeschwindigkeit von ca. 50 km/h und 200 Hz bei einer Fahrgeschwindigkeit von ca. 200 km/h. Die Fahrfläche 111 der Schiene 11 wird durch die Momentaufnahmen der Kamera 16 in Schienenlängsrichtung lückenlos abgetastet, d.h. daß die in den einzelnen Momentaufnahmen erhaltenen Lichtstrichabbildungen die Fahrflächen 111 in Längsrichtung der Schienen lückenlos erfassen. Vorzugsweise wird mit Überlappung gearbeitet, d.h. daß die aufeinanderfolgenden Lichtstrichabbildungen überlappende Längenabschnitte der Schienen erfassen. Durch die Fahrflächenunebenheiten sind die von der Kamera 16 aufgenommenen Lichtstrichabbildungen des Lichtstrichs 19 deformiert, wobei der Konturenverlauf der Lichtstrichabbildung ein Maß für die Unebenheiten in der Fahrfläche 111 in Längsrichtung der Schiene 11 ist. Mittels der im PC 24 enthaltenen geeigneten Signalverarbeitung wird aus den Deformationen der Vielzahl der Lichtstrichabbildungen das Oberflächenprofil der Fahrfläche 111 längs der Schiene 11 bestimmt.

Die mit der Fahrgeschwindigkeit der Meßplattform 13 synchronisierte Bildaufnahmesequenz oder Bildfolgefrequenz der Kamera 16 kann auf zwei verschiedene Weisen erreicht werden. Im ersten Fall wird eine kontinuierlich emittierende Laserlichtquelle 14 verwendet und die Öffnungsseiten eines Kameraverschlusses der Kamera 16 mit der Fahrgeschwindigkeit der Meßplattform 13 synchronisiert. Im zweiten Fall wird eine gepulste LaserlichtqUelle 14 verwendet und die Emissionsfrequenz der Lichtpulse mit der Fahrgeschwindigkeit der Meßplattform 13 synchronisiert. Der Kameraverschluß der Kamera 16 kann entfallen oder bleibt ständig geöffnet.

Zur Synchronisation der Bildaufnahmesequenz mit der Fahrgeschwindigkeit des Meßwagens ist - wie hier nicht weiter dargestellt - der Meßwagen mit einem Drehimpulsgeber 27 (Fig.3) ausgerüstet, der eine bestimmte Anzahl von Impulsen pro Radumdrehung des Meßwagens liefert. Bei bekanntem Raddurchmesser läßt sich das Abtastintervall, d.h. das Zeitintervall zwischen den aufeinanderfolgenden Momentanaufnahmen der Kamera 16, einfach berechnen. Eine Synchronisiereinrichtung 28 (Fig.3) gewährleistet, daß die Kamera 16 zu den Zeitpunkten Bildaufnahmen durchführt, an denen sich die Meßplattform 13 um ein Abtastintervall vorwärtsbewegt hat. Anstelle des Drehimpulsgebers 17 kann jede andere Kilometriereinrichtung verwendet werden, die für jede von der Meßplattform 13 zurückgelegte Wegeinheit einen Meßimpuls erzeugt.

Die Auswertung der von der Kamera gelieferten Ausgangssignale zur Ermittlung der Fahrflächenunebenheiten erfolgt mittels eines geeigneten Signalverarbeitungsverfahrens, das von der im PC 24 integrierten Hard- und Software durchgeführt wird. Dieses Signalverarbeitungsverfahren wird anhand des in Fig. 3 dargestellten Blockschaltbilds der Meßvorrichtung nachfolgend beschrieben. Dabei ist mit 16 die Aufnahmekamera, mit 17 der Drehpulsgeber am Meßwagen und mit 28 die Synchronisiereinrichtung zum Synchronisieren der Bildaufnahmesequenz der Kamera 16 mit der Fahrgeschwindigkeit des Meßwagens bezeichnet. Die Signalverarbeitung gliedert sich in die Signalvorverarbeitung, die in Block 29 erfolgt, sowie in eine Signalverarbeitung zur Ermittlung der Riffel und eine Signalverarbeitung zur Ermittlung der langen Wellen. Das Ergebnis der Signalverarbeitung wird in einer Anzeigeeinheit sichtbar gemacht, die von dem Bildschirm 261 gebildet ist. Die Signalverarbeitungseinheit 30 für die Riffel umfaßt in Fig. 3 die Signalverarbeitungsblöcke 31 bis 36 und die Signalverarbeitungseinheit 40 für lange Wellen die Signalverarbeitungsblöcke 41 bis 48.

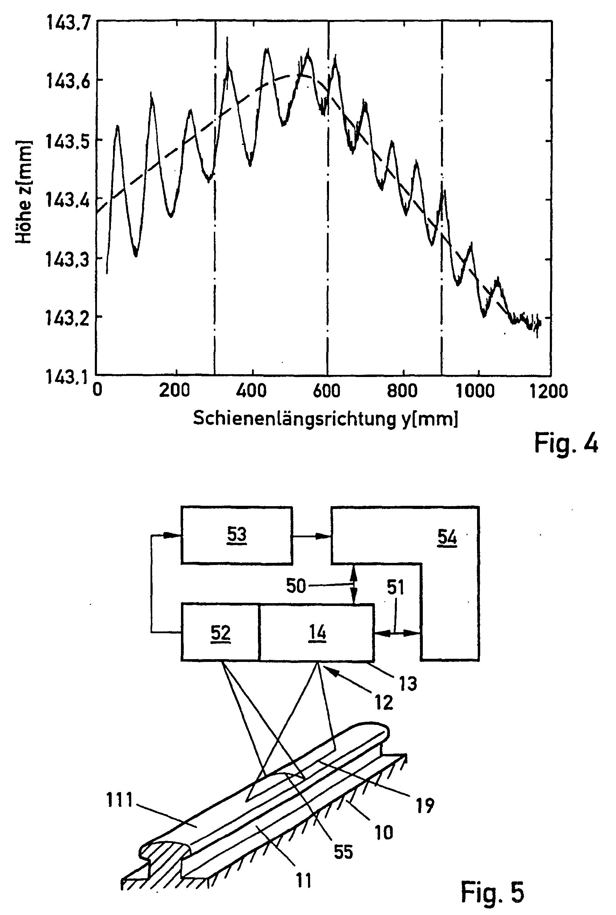

In dem Signalvorverarbeitungsblock 29 wird aus jedem durch eine Lichtstrichabbildung erzeugten elektrischen Ausgangssignal des Fotoarray 18 der Kamera 16 ein Lichtschnittsignal gebildet, das den Konturenverlauf der Lichtstrichdeformation über die Lichtstrichlänge in der Lichtstrichabbildung wiedergibt. Ein solches Lichtstrichsignal ist abschnittsweise für eine abgetastete Schienenlänge von 1200 mm in Fig. 4 dargestellt. Deutlich sind die kurzwelligen Riffel zu erkennen, die einer langwelligen Oberflächendeformation überlagert sind. Wird die Schienenlänge exakt lückenlos durch aufeinanderfolgende Momentaufnahmen der Kamera 16 abgetastet, so ergibt sich der in Fig. 4 dargestellte Signalabschnitt aus den Lichtstrichabildungen in vier aufeinanderfolgenden Momentaufnahmen. Bei Überlappung der Aufnahmebereiche sind entsprechend der Größe der Überlappung mehr Momentaufnahmen erforderlich. Diese Signalvorverarbeitung in Block 29 wird für jedes von der Kamera 16 bei jeder Momentaufnahme gelieferte Ausgangssignal durchgeführt.

In der Signalverarbeitungseinheit 30 für die Riffel wird nunmehr von dem zu jeder Momentaufnahme gehörenden Lichtschnittsignal im Block 31 eine Frequenzanalyse (DFT) durchgeführt und aus dem Quadrat der Beträge der dabei erhaltenen komplexen Werte das Periodogramm des Lichtschnittsignals gebildet. In dem nachfolgenden Block 32 erfolgt eine Schätzung des Leistungsdichtespektrums mittels inkohärenter Mittelung einer Anzahl von Periodogrammen. Dabei werden die Periodogramme von beispielsweise acht Lichtschnittsignalen aus aufeinanderfolgenden Momentaufnahmen gemittelt. Im Block 33 wird das Maximum des geschätzten Leistungsdichtespektrums gesucht. Das Argument des Maximums wird als Grobschätzung der Frequenz der Riffel ausgegeben, die mittels eines im Block 34 durchgeführten Schätzalgorithmus noch wesentlich verbessert werden kann. Die geschätzte Frequenz f der Riffel wird nunmehr der Anzeigeeinheit zugeführt und auf dem Bildschirm 261 numerisch oder graphisch dargestellt. Gleichzeitig wird im Block 32 für die geschätzte Frequenz aus den gemittelten Periodogrammen bzw. dem geschätzten Leistungsdichtespektrum der dieser Frequenz zugehörige Wert ausgelesen und daraus im Block 35 die Amplitude der Riffel ermittelt. Unter Annahme eines sinusförmigen Verlaufs der Riffel kann diese Amplitude sehr einfach als doppelte Quadratwurzel des geschätzten Leistungsdichtespektrums aus der ermittelten Frequenz berechnet werden. Die ermittelte Amplitude A der Riffel wird im Bildschirm 261 angezeigt. Aus der geschätzten Frequenz und Amplitude der Riffel wird nunmehr der arithmetische Mittenrauhwert Rₐ der Fahrfläche 111, z.B. nach DIN 4768, berechnet und auf dem Bildschirm 261 dargestellt.

Für die Ermittlung der langen Wellen wird in der Signalverarbeitungseinheit 40 eine kohärente Analyse durchgeführt. Bei dieser Signalverarbeitung besteht die grundlegende Idee in der Ermittlung der Krümmungswerte des deformierten Lichtschnittsignals für jede Momentaufnahme der Kamera 16. Da der Abtastzeitpunkt des Schienenabschnitts durch das Lichtschnittsystem 14 bekannt ist, kann aus der Vielzahl der Krümmungswerte ein neues Signal synthetisiert werden, das Informationen über die langen Wellen enthält. Hierzu wird jedes am Ausgang der Signalvorverarbeitung 29 abgenommene Lichtschnittsignal im Block 41 einer Polynomanpassung, vorzugsweise mit der Kleinsten-Quadrate-Methode, unterzogen. In Fig. 4 ist das Ergebnis einer solchen Polynomanpassung in vier aufeinanderfolgenden Lichtschnittsignalen strichliniert dargestellt. Mit den geschätzen Polynomparametern wird im Block 42 für jedes Lichtschnittsignal die Krümmung berechnet. Im Block 43, dem die aus dem Drehimpulsgeber 27 abgeleiteten Zeitpunkte der Momentaufnahmen zugeführt sind, wird dann aus der Vielzahl der Krümmungswerte aus aufeinanderfolgenden Momentaufnahmen ein Meßsignal synthetisiert, das Frequenz- und Amplitudeninformationen für die langen Wellen enthält. Im Block 44 wird nach Frequenzanalyse (DFT) das Leistungsdichtespektrum des synthetisierten Meßsignals gebildet, das hier dem Periodogramm des synthetisierten Meßwertsignals entspricht, im Block 45 das Maximum des geschätzten Leistungsdichtespektrums gesucht und das Argument des Maximums als Schätzung für die Frequenz verwendet. Eine genaue Schätzung der Frequenz erfolgt im Block 46 mittels eines geeigneten Schätzalgorithmus. Wie bei der Signalverarbeitungeinheit 30 für die Riffel wird aus dem geschätzten Leistungsdichtespektrum des synthetisierten Meßsignals der zu der geschätzten Frequenz gehörige Wert ermittelt und daraus im Block 47 die Amplitude der langen Welle berechnet. Aus der Frequenz- und Amplitudenschätzung wird dann die Rauheit der langen Wellen ermittelt. Die Frequenz f, die Amplitude A und der arithmetische Mittenrauhwert Rₐ werden wiederum auf dem Bildschirm 261 dargestellt. Bei der Berechnung der Amplitude der langen Wellen ist zu berücksichtigen, daß diese sich von der Amplitude des synthetischen Meßsignals (bei Annahme eines sinusförmigen Verlaufs) durch einen Faktor unterscheidet.

Die Polynomanpassung eines vollständigen Lichtschnittsignals führt bei langen Wellen mit einer Wellenlänge λ unter 500 mm nicht zu einem befriedigenden Ergebnis. In diesem Fall werden die Lichtschnittsignale in einzelne Abschnitte unterteilt, jeder Lichtschnittsignalabschnitt der beschriebenen Polynomanpassung unterzogen und für jeden Lichtschnittsignalabschnitt die Krümmung berechnet. Die Krümmungswerte werden dann in entsprechender Weise zum Meßsignal zusammengesetzt.

Für eine genaue Aussage über die Fahrflächenunebenheiten ist es erforderlich, daß die Messung im festen Abstand zur Schieneninnenkante erfolgt. Wegen der Fahrzeugbewegungen kann dies nur durch zusätzliche Maßnahmen gewährleistet werden, die nachfolgend anhand der Fig. 5 erläutert werden. In Fig. 5 ist mit 14 wieder das auf der Meßplattform 13 angeordnete Lichtschnitt- oder Lasertriangulationssystem und mit 19 der von dessen Laserlichtquelle projizierte Lichtstrich bezeichnet. Die Meßplattform 13 ist nunmehr in der Querschnittsprofilebene der Schiene 11 beweglich am Meßwagen positioniert, so daß sie relativ zur Schiene in Vertikalrichtung (Pfeil 50) und quer zur Schienenlängsrichtung (Pfeil 51) bewegt werden kann. Auf der Meßplattform 13 ist zusätzlich eine Positionssensorik 52 angeordnet, deren Ausgangssignal an einen Steuerrechner 53 gelegt ist. Der Steuerrechner 53 ist ausgangsseitig mit einem Antriebssystem 54 verbunden, das die Meßplattform 13 in Richtung Pfeil 50 und/oder Richtung Pfeil 51 um vorgegebene Wegstrecken zu verstellen vermag. Die Positionssensorik 32 vermißt das Schienenkopfquerprofil, aus dem der Steuerrechner 53 die relative Lage des Lichstrichs 19 im Querprofil und damit die Lage der Meßplattform 13 relativ zur Schiene 11 bestimmt. Der Steuerrechner 53 vergleicht nunmehr den Abstand des Lichtstrichs 19 von der Schieneninnenkante mit einem vorgegebenen Sollwert und steuert bei Abweichung von Ist- und Sollwert das Antriebssytem 54 so lange an, bis die Differenz zu Null geworden ist. Als Positionssensorik 52 kann ein Schienenkopfquerprofilmeßgerät, wie es im Markt erhältlich ist, verwendet werden. Dabei erfolgt die Positionierung mittels eines weiteren Lasertriangulationssystems, dessen Meßebene um 90° gegenüber dem Lasertriangulationssystem 14 gedreht ist und dessen Laserlichtquelle den mit 55 bezeichneten Laserstrich auf die Schiene 11 projiziert, der rechtwinklig zu dem Lichtstrich 19 verläuft. In diesem Fall benötigt dessen Aufnahmekamera keine anamorphotische Optik und kommt mit einem 50 Hz Meßtakt aus. Aus dem Ausgangssignal der Aufnahmekamera wird die relative Lage des vom Lasertriangulationssystem 14 auf die Fahrfläche 111 der Schiene 11 projizierten Lichtstrichs 19 bestimmt und mit diesem Signal die Meßplattform 13 positioniert.

In einer alternativen Ausführungsform kann auf eine Verschiebbarkeit der Meßplattform 13 verzichtet werden und in den Strahlengang der Laserlichtquelle mit Linienoptik und der Kamera 16 Spiegel angeordnet werden, die mittels des Steuersignals des Steuerrechners 53 entsprechend geschwenkt werden.

Die Erfindung ist nicht auf das beschriebene Beispiel der Messung von Unebenheiten in der Fahrfläche von Schienen beschränkt, bei dem ein die Meßplattform tragender Meßwagen mit beliebiger Geschwindigkeit auf den Schienen entlangfährt. Die Erfindung ist grundsätzlich auf die Messung der beschriebenen Unebenheiten in Oberflächen von langgestreckten oder flächigen Objekten oder Gegenständen ausdehnbar, wobei es unerheblich ist, ob das Objekt oder die Meßplattform sich bewegt. Ein möglicher Anwendungsfall der Erfindung wäre die Messung der beschriebenen Unebenheiten in Bändern oder Blechen, die z.B. auf einem Transportband aufliegen oder sonstwie bewegt werden und dabei an der stationären Meßplattform vorbeigeführt werden. Bei flächigen Objekten, wie Blechen, werden bevorzugt mehrere Meßplattformen nebeneinander angeordnet, um das Blech auf seiner ganzen Breite erfassen zu können. Der Vorteil im erfindungsgemäßen Verfahren und in der Vorrichtung liegt darin, daß sie völlig unempfindlich gegen Schwingungen oder Erschütterungen der Meßplattform und/oder der Objekte ist und eine hohe Meßgeschwidigkeit zuläßt. Es müssen daher keine großen Anforderungen an den Gleichlauf oder die Objekte oder Gegenstände an der Meßvorrichtung vorbeiführenden Transportmittel gestellt werden.

## Patentansprüche

1. Verfahren zur Messung von durch Riffel und/oder lange Wellen gebildeten Unebenheiten in der Oberfläche eines Objektes von einer Meßplattform aus, wobei Meßplattform und Objekt relativ zueinander bewegt werden, **dadurch gekennzeichnet, daß** von der Meßplattform (13) aus ein in Bewegungsrichtung sich erstreckender Lichtstrich (19) unter einem zur Oberflächennormalen (20) geneigten, festen Projektionswinkel (α) auf die Oberfläche (111) des Objekts (11) projiziert wird, daß der Lichtstrich (19) mit einer Vielzahl von aufeinanderfolgenden Momentaufnahmen auf einem an der Meßplattform (13) mit einem gegenüber dem Projektionswinkel (α) gekippten Aufnahmewinkel (α+β) fest angeordneten, flächenhaft positionsempfindlichen Fotoempfänger (18) so abgebildet wird, daß die Vielzahl der Lichstrichabbildungen die Oberfläche längs der Bewegungsrichtung zumindest lückenlos, vorzugsweise mit sich möglichst weit überlappenden Längenabschnitten, erfaßt, und daß aus den Deformationen in der Vielzahl der Lichtstrichabbildungen das Profil der Oberfläche (111) längs der Bewegungsrichtung bestimmt wird.

2. Verfahren nach Anspruch 1, **dadurch gekennzeichnet, daß** die Folgefrequenz der Momentaufnahme mit der Relativgeschwindigkeit zwischen Meßplattform (13) und Objekt (11) sychronisiert wird.

3. Verfahren nach Anspruch 1 oder 2, **dadurch gekennzeichnet, daß** die Strichlänge des Lichtstrichs (19) wesentlich größer als die Wellenlänge (λ) der Riffel und kleiner als die Wellenlänge (λ) der langen Wellen, vorzugsweise in der Größenordnung 300 mm bis 500 mm, bemessen wird.

4. Verfahren nach Anspruch 3, **dadurch gekennzeichnet, daß** aus jedem durch eine Lichtstrichabbildung erzeugten Ausgangssignal des Fotoempfängers (18) ein den Konturenverlauf der Lichtstrichdeformation über die Lichstrichlänge wiedergebendes Lichtschnittsignal gebildet wird.

5. Verfahren nach Anspruch 4, **dadurch gekennzeichnet, daß** zum Messen der Riffel zu jeder Momentaufnahme nach Frequenzanalyse des Lichtschnittsignals die Periodogramme des Lichtschnittsignals gebildet und durch eine inkohärente Mittelung einer Anzahl von Periodogrammen das Leistungsdichtespektrum geschätzt wird.

6. Verfahren nach Anspruch 5, **dadurch gekennzeichnet, daß** das Maximum des geschätzten Leistungsdichtespektrums gesucht und das Argument des Maximums als Grobschätzung der Frequenz der Riffel ausgegeben wird.

7. Verfahren nach Anspruch 6, **dadurch gekennzeichnet, daß** die Grobschätzung der Frequenz durch Anwendung eines Schätzalgorithmus verbessert wird.

8. Verfahren nach Anspruch 6 oder 7, **dadurch gekennzeichnet, daß** die Amplitude der Riffel aus dem der geschätzten Frequenz zugehörigen Wert des geschätzten Leistungsdichtespektrums bestimmt wird, vorzugsweise unter Annahme eines sinusförmigen Verlaufs der Riffel als doppelte Quadratwurzel dieses Wertes berechnet wird.

9. Verfahren nach einem der Ansprüche 4 bis 8, **dadurch gekennzeichnet, daß** zur Messung der langen Wellen in jeder Momentaufnahme die Krümmung des Lichtschnittsignals oder die Krümmung von einzelnen Abschnitten des in mehrere Abschnitte unterteilten Lichtschnittsignals bestimmt und aus den Krümmungswerten in aufeinanderfolgenden Momentaufnahmen ein Meßsignal synthetisiert wird und daß die Frequenz und Amplitude des synthetisierten Meßsignals geschätzt und als Bestimmungsgrößen der langen Wellen ausgegeben werden.

10. Verfahren nach Anspruch 9, **dadurch gekennzeichnet, daß** vor Krümmungsbestimmung das Lichtschnittsignal bzw. die Abschnitte des Lichtschnittsignals einer Polynomanpassung, vorzugsweise mit der Kleinsten-Quadrate-Methode, unterzogen wird bzw. werden.

11. Verfahren nach Anspruch 9 oder 10, **dadurch gekennzeichnet, daß** von dem synthetisierten Meßsignal nach Frequenzanalyse das Leistungsdichtespektrum geschätzt, dessen Maximum gesucht und das Argument des Maximums als Schätzung für die Frequenz der langen Wellen verwendet wird.

12. Verfahren nach Anspruch 11, **dadurch gekennzeichnet, daß** die Amplitude der langen Wellen aus dem der geschätzten Frequenz zugehörigen Betrag des geschätzten Leistungsdichtespektrums bestimmt wird.

13. Verfahren nach einem der Ansprüche 1 bis 12, **gekennzeichnet durch** seine Anwendung auf in einem Gleisbett verlegten Schienen für den Fahrbetrieb von schienengebundenen Verkehrsmitteln, indem die Meßplattform (13) längs der Schiene (11) verfahren wird und die Fahrfläche (111) der Schiene (11) die Objektoberfläche bildet.

14. Auf einer schienengebundenen, sich bewegenden Meßplattform angeordnete Vorrichtung zur Durchführung des Verfahren nach Anspruch 13, **gekennzeichnet durch** ein Lichtschnitt- oder Lasertriangulationssystem (14), das eine Laserlichtquelle (15) mit Linienoptik zur Projizierung eines in Schienenlängsrichtung verlaufenden Lichtstrichs (19) begrenzter Länge auf die Fahrfläche (111) der Schiene (11) und eine Flächenkamera (16) mit einer zur optischen Achse (22) der Linienoptik (15) gekippten, auf die Schienenfahrfläche (111) gerichteten, optischen Achse (22) und einer mit der Fahrgeschwindigkeit der Meßplattform (13) synchronisierten Bildaufnahmesequenz aufweist, **durch** eine Signalvorverarbeitungseinheit (29) zur Bildung von Lichtschnittsignalen aus den Ausgangssignalen der Flächenkamera (16), **durch** eine an der Signalvorverarbeitungseinheit (29) angeschlossene erste Signalverarbeitungseinheit (30) zur Schätzung von Amplitude und Frequenz der Riffel mittels inkohärenter Mittelung der Frequenzspektren der Lichtschnittsignale, **durch** eine an die Signalvorverarbeitungseinheit (29) angeschlossene zweite Signalverarbeitungseinheit (40) zur Schätzung von Amplitude und Frequenz der langen Wellen mittels kohärenter Analyse der Lichtschnittsignale und **durch** eine Anzeigeeinheit (26) zur Darstellung und/oder Dokumentation der Amplituden (A) und Frequenz (f) der Riffel und langen Wellen und/oder der daraus berechneten arithmetischen Mittenrauhwerte (Rₐ) der Schienenfahrfläche (111).

15. Vorrichtung nach Anspruch 14, **dadurch gekennzeichnet, daß** die Flächenkamara (16) ein anamorphotisches Aufnahmeobjektiv (17) aufweist, das so ausgerichtet ist, daß der Abbildungsmaßstab in Längsrichtung der Schiene (11) kleiner ist als der Abbildungsmaßstab rechtwinklig dazu.

16. Vorrichtung nach Anspruch 14 oder 15, **dadurch gekennzeichnet, daß** die Meßplattform (13) an einem auf der Schiene (11) fahrenden Meßwagen angeordnet ist, daß am Meßwagen eine Kilometriereinrichtung, die pro von dem Meßwagen zurückgelegter Wegeinheit einen Meßimpuls generiert, vorzugsweise ein Drehimpulsgeber (27), der pro Radumdrehung eine feste Anzahl von Impulsen abgibt, angeordnet ist und daß die Meßimpulse einerseits einer der Bildaufnahmesequenz der Flächenkamera (16) steuernden Synchronisiereinheit (28) und andererseits der zweiten Signalverarbeitungseinheit (30) für die kohärente Analyse der Lichtschnittsignale zugeführt sind.

17. vorrichtung nach einem der Ansprüche 14 bis 16, **gekennzeichnet durch** eine die Fahrfläche (111) der Schiene (11) in Schienenquerrichtung abtastende Positionssensorik (52) und eine an die Positionssensorik (52) angeschlossene Steuervorrichtung (53, 54), die das Lichtschnitt- oder Lasertriangulationssystem (14) in Abhängigkeit von dem Ausgangssignal der Positionssensorik (52) so steuert, daß der vom Lichtschnittsystem (14) auf die Fahrfläche (111) projizierte Lichtstrich (19) einen konstanten Querabstand von der Schieneninnenkante hat.

18. Vorrichtung nach Anspruch 17, **dadurch gekennzeichnet, daß** die Meßplattform (13) am Meßwagen in der Profilebene der Schiene (11) verschieblich angeordnet ist und daß die Steuervorrichtung einen die Meßplattform (13) in Vertikalrichtung (Pfeil 50) und eine die Meßplattform (13) in Querrichtung (Pfeil 51) verstellenden Antrieb (54) sowie eine die Antriebe (54) steuernden Steuerrechner (53) aufweist, der eingangsseitig mit der Positionssensorik (52) verbunden ist.

## Claims

1. Method of measuring, from a measurement platform, irregularities formed by grooves and/or long waves in the surface of an object, measurement platform and object being moved relative to each other, **characterized in that** from the measurement platform (13) a streak of light (19) extending in the direction of movement is projected onto the surface (111) of the object (11) at a fixed projection angle (α) inclined with respect to the surface normal (20), is imaged by a large number of successive instantaneous recordings on a two-dimensional, position-sensitive photoreceiver (18) arranged to be fixed to the measurement platform (13) at a recording angle (α + β) which is tilted with respect to the projection angle (α), in such a way that the large number of images of the streak of light register the surface along the direction of movement at least without gaps, preferably with longitudinal sections which overlap as far as possible, and **in that** the profile of the surface (111) along the direction of movement is determined from the deformations in the large number of images of the streak of light.

2. Method according to Claim 1, **characterized in that** the sequential frequency of the instantaneous recording is synchronized with the relative speed between the measurement platform (13) and object (11).

3. Method according to Claim 1 or 2, **characterized in that** the streak length of the streak of light (19) is dimensioned to be significantly greater than the wavelength (λ) of the grooves and smaller than the wavelength (λ) of the long waves, preferably of the order of magnitude of 300 mm to 500 mm.

4. Method according to Claim 3, **characterized in that** a light-streak signal which reproduces the course of the contour of the deformation of the streak of light over the length of the streak of light is formed from each output signal from the photoreceiver (18) produced by an image of the streak of light.

5. Method according to Claim 4, **characterized in that** in order to measure the grooves, the periodogram of the light-streak signal relating to each instantaneous recording is formed in accordance with the frequency analysis of the light-streak signal, and the power density spectrum is estimated by means of incoherent averaging of a number of periodograms.

6. Method according to Claim 5, **characterized in that** a search is made for the maximum of the estimated power density spectrum and the argument of the maximum is output as a coarse estimate of the frequency of the grooves.

7. Method according to Claim 6, **characterized in that** the coarse estimate of the frequency is improved by applying an estimation algorithm.

8. Method according to Claim 6 or 7, **characterized in that** the amplitude of the grooves is determined from the value of the estimated power density spectrum associated with the estimated frequency, preferably as twice the square root of this value, by assuming a sinusoidal course of the grooves.

9. Method according to one of Claims 4 to 8, **characterized in that**, in order to measure the long waves, in each instantaneous recording the curvature of the light-streak signal or the curvature of individual sections of the light-streak signal subdivided into a plurality of sections is determined and, from the curvature values in successive instantaneous recordings, a measured signal is synthesized, and **in that** the frequency and amplitude of the synthesized measured signal is estimated and output as determining variables of the long waves.

10. Method according to Claim 9, **characterized in that** before determining the curvature, the light-streak signal or the sections of the light-streak signal is or are subjected to the fitting of a polynomial, preferably using the least squares method.

11. Method according to Claim 9 or 10, **characterized in that** the power density spectrum is estimated from the synthesized measured signal after frequency analysis, a search is made for its maximum and the argument of the maximum is used as an estimate of the frequency of the long waves.

12. Method according to Claim 11, **characterized in that** the amplitude of the long waves is determined from the magnitude of the estimated power density spectrum associated with the estimated frequency.

13. Method according to one of Claims 1 to 12, **characterized by** its use on rails laid in a track bed for the movement operation of rail-bound transport, by the measurement platform (13) being moved along the rail (11) and the running surface (111) of the rail (11) forming the object surface.

14. Apparatus arranged on a rail-bound, moving measurement platform for implementing the method according to Claim 13, **characterized by** a light-section or laser triangulation system (14), which comprises a laser light source (15) with linear optics for projecting a streak of light (19) of limited length running in the rail longitudinal direction onto the running surface (111) of the rail (11), and a two-dimensional camera (16) with an optical axis (22) which is tilted with respect to the optical axis (22) of the linear optics (15) and is aimed at the rail running surface (111) and an image recording sequence which is synchronized with the speed of travel of the measurement platform (13), by a signal preprocessing unit (29) for forming the light-streak signals from the output signals from the two-dimensional camera (16),
by a first signal processing unit (13) connected to the signal preprocessing unit (29) for estimating the amplitude and frequency of the grooves by means of incoherent averaging of the frequency spectrum of the light-streak signals,
by a second signal processing unit (14) connected to the signal preprocessing unit (29) for estimating the amplitude and frequency of the long waves by means of coherent analysis of the light-streak signals,
and by a display unit (26) for the display and/or documentation of the amplitudes (A) and frequency (f) of the grooves and long waves and/or the arithmetic average roughness values (Rₐ) calculated from these for the rail running surface (111).

15. Apparatus according to Claim 14, **characterized in that** the two-dimensional camera (16) has an anamorphotic recording objective (17) which is aligned in such a way that the imaging scale in the longitudinal direction of the rail (11) is smaller than the imaging scale at right angles thereto.

16. Apparatus according to Claim 14 or 15, **characterized in that** the measurement platform (13) is arranged on a measurement carriage which travels on the rail (11), **in that** on the measurement carriage there are arranged an odometer, which generates a measurement pulse for distance unit covered by the measurement carriage, preferably a rotary encoder (27), which outputs a fixed number of pulses per wheel revolution, and **in that** the measurement pulses are supplied firstly to a synchronising unit (28) that controls the image recording sequence of the two-dimensional camera (16) and secondly to the second signal processing unit (30) for the coherent analysis of the light-streak signals.

17. Apparatus according to one of Claims 14 to 16, **characterized by** a position sensor system (52) which scans the running surface (111) of the rail (11) in the rail transverse direction and a control apparatus (53, 54) which is connected to the position sensor system (52) and which controls the light-section or laser triangulation system (14) as a function of the output signals from the position sensor system (52) in such a way that the streak of light (19) projected onto the running surface (111) by the light-streak system has a constant transverse spacing from the inner edge of the rail.

18. Apparatus according to Claim 17, **characterized in that** the measurement platform (13) is arranged on the measurement carriage such that it can be displaced in the plane of the profile of the rail (11), and **in that** the control apparatus comprises a drive (54) which adjusts the measurement platform (13) in the vertical direction (arrow 50) and a drive (54) which adjusts the measurement platform (13) in the transverse direction (arrow 51), and also a control computer (53) which controls the drives (54) and whose input is connected to the position sensor system (52).

## Revendications

1. Procédé de mesure, depuis une plate-forme de mesure, d'inégalités à la surface d'un objet formées par des stries et/ou des ondulations longitudinales, dans lequel la plate-forme de mesure et l'objet sont déplacés l'un par rapport à l'autre, **caractérisé en ce que** depuis la plate-forme de mesure (13), un rayon lumineux (19) s'étendant dans la direction du mouvement, est projeté, suivant un angle de projection (α) fixe, incliné par rapport à la normale (20) à la surface, sur la surface (111) de l'objet (11), **en ce que** le rayon lumineux (19) est reproduit, avec une pluralité de photographies instantanées successives, sur un photodétecteur (18) sensible à la position en plan, disposé fixement sur la plate-forme de mesure (13) avec un angle de prise de vue (α+β) incliné par rapport à l'angle de projection (α), de sorte que la pluralité des reproductions du rayon lumineux soit détectée le long du sens de déplacement au moins sans vides, de préférence avec des portions longitudinales se chevauchant aussi largement que possible, et que le profil de la surface (111) soit déterminé le long du sens de déplacement à partir des déformations dans la pluralité des reproductions du rayon lumineux.

2. Procédé selon la revendication 1, **caractérisé en ce que** la fréquence de succession des photographies instantanées est synchronisée avec la vitesse relative entre la plate-forme de mesure (13) et l'objet (11).

3. Procédé selon la revendication 1 ou 2, **caractérisé en ce que** la longueur du rayon du rayon lumineux (19) est considérablement plus grande que la longueur d'onde (λ) des stries et plus petite que la longueur d'onde (λ) des ondulations longitudinales, de préférence de l'ordre de 300 mm à 500 mm.

4. Procédé selon la revendication 3, **caractérisé en ce qu'**à partir de chaque signal de sortie du photodétecteur (18) produit par une reproduction du rayon lumineux, il se forme un signal de coupe optique restituant l'allure du contour de la déformation du rayon lumineux sur la longueur du rayon lumineux.

5. Procédé selon la revendication 4, **caractérisé en ce que** pour la mesure des stries à chaque photographie instantanée, après l'analyse de fréquence du signal de coupe optique, le périodogramme du signal de coupe optique est formé et le spectre de puissance volumique est estimé par un moyennage incohérent d'une pluralité de périodogrammes.

6. Procédé selon la revendication 5, **caractérisé en ce que** le maximum du spectre de puissance volumique estimé est recherché et l'argument du maximum est fourni comme estimation grossière de la fréquence des stries.

7. Procédé selon la revendication 6, **caractérisé en ce que** l'estimation grossière de la fréquence est améliorée en utilisant un algorithme d'estimation.

8. Procédé selon la revendication 6 ou 7, **caractérisé en ce que** l'amplitude des stries est déterminée à partir de la valeur du spectre de puissance volumique estimé associée à la fréquence estimée, et est calculée sous forme de racine carrée double de cette valeur de préférence en supposant une allure sinusoïdale des stries.

9. Procédé selon l'une quelconque des revendications 4 à 8, **caractérisé en ce que** pour la mesure des ondulations longitudinales à chaque photographie instantanée, la courbure du signal de coupe optique ou la courbure de portions individuelles du signal de coupe optique divisé en plusieurs portions est déterminée et un signal de mesure est synthétisé à partir des valeurs de courbure dans les photographies instantanées successives, et **en ce que** la fréquence et l'amplitude du signal de mesure synthétisé sont estimées et sont fournies sous forme de valeurs de détermination des ondulations longitudinales.

10. Procédé selon la revendication 9, **caractérisé en ce qu'**avant la détermination de la courbure, le signal de coupe optique ou les portions du signal de coupe optique est ou sont soumis(es) à une adaptation polynomiale, de préférence avec la méthode des moindres carrés.

11. Procédé selon la revendication 9 ou 10, **caractérisé en ce qu'**à partir du signal de mesure synthétisé après l'analyse de fréquence, on estime le spectre de puissance volumique, dont on recherche le maximum et l'argument du maximum est utilisé comme estimation de la fréquence des ondulations longitudinales.

12. Procédé selon la revendication 11, **caractérisé en ce que** l'amplitude des ondulations longitudinales est déterminée à partir de la valeur du spectre de puissance volumique estimé associé à la fréquence estimée.

13. Procédé selon l'une quelconque des revendications 1 à 12, **caractérisé par** son application à des rails posés sur un ballast de voie pour la circulation de moyens de transport sur rails, en ce que la plate-forme de mesure (13) est déplacée le long des rails (11) et la surface de roulement (111) des rails (11) forme la surface de l'objet.

14. Dispositif pour mettre en oeuvre le procédé selon la revendication 13, disposé sur une plate-forme de mesure mobile sur rails, **caractérisé par** un système de coupe optique ou de triangulation laser (14), qui présente une source de lumière laser (15) avec une optique linéaire pour la projection d'un rayon lumineux (19) s'étendant dans la direction longitudinale des rails, de longueur limitée à la surface de roulement (111) des rails (11) et une caméra de surface (16) avec un axe optique (22) incliné par rapport à l'axe optique (22) de l'optique linéaire (15), orienté sur la surface de roulement des rails (111), et une séquence de prises d'images synchronisée avec la vitesse d'avance de la plate-forme de mesure (13), par une unité de pré-traitement des signaux (29) pour la formation de signaux de coupe optique à partir des signaux de sortie de la caméra de surface (16), par une première unité de traitement des signaux (30) raccordée à l'unité de pré-traitement des signaux (29) pour l'estimation de l'amplitude et de la fréquence des stries au moyen d'un moyennage incohérent des spectres de fréquence des signaux de coupe optique, par une deuxième unité de traitement des signaux (40) raccordée à l'unité de pré-traitement des signaux (29) pour l'estimation de l'amplitude et de la fréquence des ondulations longitudinales au moyen d'une analyse cohérente des signaux de coupe optique et par une unité d'affichage (26) pour la représentation et/ou la documentation des amplitudes (A) et de la fréquence (f) des stries et des ondulations longitudinales et/ou des valeurs brutes moyennes (Rₐ) arithmétiques de la surface de roulement des rails (111) calculées à partir de celles-ci.

15. Dispositif selon la revendication 14, **caractérisé en ce que** la caméra de surface (16) présente un objectif de prise de vue anamorphotique (17), qui est orienté de telle sorte que l'amplification dans la direction longitudinale des rails (11) soit plus petite que l'amplification perpendiculairement à celle-ci.

16. Dispositif selon la revendication 14 ou 15, **caractérisé en ce que** la plate-forme de mesure (13) est disposée sur un chariot de mesure se déplaçant sur les rails (11), **en ce qu'**un dispositif de kilométrage, qui génère une impulsion de mesure pour chaque unité de distance parcourue par le chariot de mesure, de préférence un générateur d'impulsions rotationnel (27), qui délivre pour chaque rotation de la roue un nombre fixe d'impulsions, est disposé sur le chariot de mesure, et **en ce que** les impulsions de mesure sont acheminées d'une part à une unité de synchronisation (28) commandant la séquence de prise d'images de la caméra de surface (16) et d'autre part à la deuxième unité de traitement des signaux (30) en vue de l'analyse cohérente des signaux de coupe optique.

17. Dispositif selon l'une quelconque des revendications 14 à 16, **caractérisé par** un système de détection de position (52) détectant la surface de roulement (111) des rails (11) dans la direction transversale aux rails et un dispositif de commande (53, 54) raccordé au système de détection de position (52), qui commande le système de coupe optique ou de triangulation laser (14) en fonction du signal de sortie du système de détection de position (52) de telle sorte que le rayon lumineux (19) projeté par le système de coupe optique (14) sur la surface de roulement (111) soit à une distance transversale constante du bord intérieur du rail.

18. Dispositif selon la revendication 17, **caractérisé en ce que** la plate-forme de mesure (13) est disposée de manière déplaçable sur le chariot de mesure dans le plan du profil des rails (11), et **en ce que** le dispositif de commande présente une commande (54) déplaçant la plate-forme (13) dans la direction verticale (flèche 50) et une commande déplaçant la plate-forme (13) dans la direction transversale (flèche 51) ainsi qu'un ordinateur de commande (53) commandant les commandes (54), lequel est connecté du côté de l'entrée au système de détection de position (52).
